(19) **Europäisches Patentamt**
**European Patent Office**
**Office européen des brevets**

(11) **EP 3 274 670 B1**

(12) **FASCICULE DE BREVET EUROPEEN**

(45) Date de publication et mention
de la délivrance du brevet:
**16.02.2022 Bulletin 2022/07**

(21) Numéro de dépôt: **16713817.1**

(22) Date de dépôt: **24.03.2016**

(51) Classification Internationale des Brevets (IPC):
**G01H 9/00** *(2006.01)* **G01V 1/18** *(2006.01)*

(52) Classification Coopérative des Brevets (CPC):
**G01H 9/004; G01V 1/186**

(86) Numéro de dépôt international:
**PCT/EP2016/056539**

(87) Numéro de publication internationale:
**WO 2016/156197 (06.10.2016 Gazette 2016/40)**

(54) **PROCÉDÉ DE FABRICATION D'UN DISPOSITIF DE CAPTEUR À FIBRE OPTIQUE**

VERFAHREN ZUR HERSTELLUNG EINER FASEROPTISCHEN SENSORVORRICHTUNG

METHOD OF MANUFACTURING AN OPTICAL-FIBRE SENSOR DEVICE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.03.2015 FR 1500613**

(43) Date de publication de la demande:
**31.01.2018 Bulletin 2018/05**

(73) Titulaire: **Thales**
**92400 Courbevoie (FR)**

(72) Inventeurs:
• **LAUNAY, François-Xavier**
**06903 Sophia Antipolis Cedex (FR)**
• **LARDAT, Raphaël**
**06903 Sophia Antipolis Cedex (FR)**
• **ROUX, Gérard**
**06903 Sophia Antipolis Cedex (FR)**

(74) Mandataire: **Marks & Clerk France**
**Immeuble "Visium"**
**22, avenue Aristide Briand**
**94117 Arcueil Cedex (FR)**

(56) Documents cités:
**WO-A1-2010/123566    WO-A1-2010/136723**
**WO-A1-2012/140179    CN-B- 102 288 226**

• **Lars Voxen Hansen ET AL: "MODELLING OF HYDROPHONE BASED ON A DFB FIBER LASER", XXI ICTAM, PROCEEDINGS OF 21ST INTERNATIONAL CONGRESS OF THEORETICAL AND APPLIED MECHANICS, 15-21 August 2004, 15 août 2004 (2004-08-15), XP055195241, Warsaw, Poland Extrait de l'Internet: URL:http://fluid.ippt.gov.pl/ictam04/text/ sessions/docs/FSM1/12533/FSM1_12533.pdf [extrait le 2015-06-11]**

## Description

### Domaine de l'invention

L'invention concerne de manière générale les procédés de fabrication de capteurs à fibres optiques.

### Art antérieur

Un capteur à fibre optique comprend une fibre optique de mesure dont les caractéristiques optiques sont sensibles à une grandeur physique. Lorsque de la lumière est injectée dans la fibre optique, un signal lumineux est généré et détecté par le capteur. Ce signal est ensuite converti et traité pour retourner la grandeur mesurée. Les capteurs à fibres optiques sont largement utilisées dans divers types d'applications non seulement en raison de leur faible encombrement (taille et poids relativement faibles) et de leur insensibilité aux perturbations électromagnétiques, mais aussi parce qu'ils sont particulièrement adaptés aux techniques de multiplexage et à la mise en oeuvre d'amplificateurs ou de capteurs distribués. Ils permettent également de limiter l'intrusivité du capteur dans le milieu.

Des exemples de capteurs à fibre optique ont été décrits dans CN 102 288 226 B. Certains capteurs à fibres optiques utilisent des réseaux de Bragg inscrits dans la fibre. Un réseau de Bragg est un réflecteur comprenant des couches alternées d'indices de réfraction différents, ce qui provoque une variation périodique de l'indice de réfraction effectif dans la fibre optique. Les capteurs à fibre à réseau de Bragg sont utilisés pour mesurer une grandeur physique qui correspond à une contrainte appliquée au capteur. La contrainte appliquée au capteur induit une variation de longueur d'onde.

Les capteurs à fibres optiques à réseaux de Bragg peuvent être passifs ou actifs (capteur à laser à fibre optique).

Les capteurs à fibres optiques à réseaux de Bragg sont agencés dans une enveloppe de protection, traversée de part et d'autre par la fibre optique. Lors du montage d'un tel capteur, il est utile de laisser une longueur supplémentaire de fibre non tendue à l'intérieur de l'enceinte. En effet, en l'absence d'une telle longueur supplémentaire, la fibre optique tendue risque de générer une raideur dans une large plage de fonctionnement (notamment plage de température) qui est préjudiciable au bon fonctionnement du capteur. Par ailleurs, une telle longueur supplémentaire permet à la fibre de filtrer les perturbations mécaniques qui peuvent venir de l'extérieur du capteur.

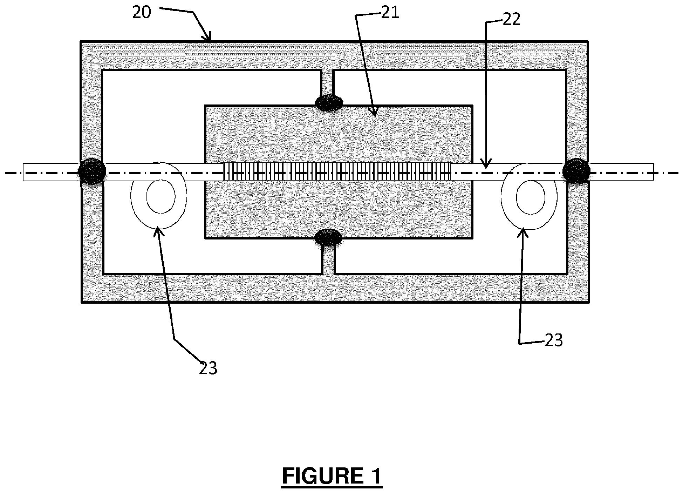

Une solution connue pour réaliser une longueur supplémentaire de fibre est illustrée sur la figure 1. Selon cette approche, au moins une boucle 23 est réalisée avec la fibre 22 dans l'enveloppe 20 qui loge le capteur 21, ce qui permet de dégager une longueur supplémentaire. Cependant, une telle solution génère un encombrement important en raison du rayon de courbure minimum autorisé pour une fibre optique (de l'ordre du cm). Cette solution n'est donc pas adaptée aux capteurs compacts.

### Définition générale de l'invention

L'invention vient améliorer la situation. A cet effet, elle propose un procédé de fabrication d'un dispositif de capteur à fibre optique selon la revendication 1. Selon une caractéristique, l'étape d'élongation différentielle de la fibre est réalisée en étirant mécaniquement l'enveloppe dans la direction longitudinale, de chaque côté de l'enveloppe, vers l'extérieur de l'enveloppe, puis en relâchant l'enveloppe, ce qui permet de générer la distension des portions de fibre.

Dans un mode de réalisation, l'élongation différentielle $\Delta_L$ de l'enveloppe par rapport au capteur à fibre optique satisfait une contrainte relative à la température environnante $T_S$ au moment de la fixation de la fibre à l'enveloppe, à la température maximale $T_{max}$ de fonctionnement du capteur à fibre, au coefficient de dilatation thermique $\lambda_C$ du capteur à fibre et au coefficient de dilatation thermique $\lambda_P$ de l'enveloppe .

En particulier, la contrainte est définie par l'inégalité :

$$\Delta_{\mathrm{L}} \geq \frac{L_P}{2}.\lambda_P(T_{max} - T_S) - \frac{L_C}{2}.\lambda_C(T_{max} - T_S),$$

où $\lambda_C$ désigne le coefficient de dilatation thermique du dispositif de maintien du capteur à fibre, $\lambda_P$ le coefficient de dilatation thermique de l'enveloppe, $L_C$ désigne la longueur du capteur à fibre, $L_P$ désigne la longueur de l'enveloppe, $T_S$ la température environnante au moment de la fixation de la fibre à l'enveloppe, et $T_{max}$ la température maximale de fonctionnement du capteur.

Dans un autre mode de réalisation, l'étape d'élongation différentielle est réalisée par dilatation thermique différentielle de l'enveloppe par rapport au capteur à fibre optique en augmentant la température jusqu'à une température de dilatation supérieure à la température maximale de fonctionnement définie pour le dispositif de capteur à fibre optique, puis en ramenant la température à une température inférieure à la température de dilatation, ce qui permet de générer tandis que la distension des portions de fibre. Plus précisément, la distension des portions de fibres est générée en ramenant la température à une température comprise dans la plage de fonctionnement du capteur qui est donc inférieure à la température de dilatation.

L'enveloppe peut être alors choisie de manière à avoir un coefficient de dilatation thermique selon l'équation :

$$L_P \lambda_P > L_C \lambda_C,$$

où $\lambda_C$ désigne le coefficient de dilatation thermique du dispositif de maintien du capteur, $\lambda_P$ désigne le coefficient de dilatation thermique de l'enveloppe, $L_C$ désigne la longueur du dispositif de maintien, et $L_P$ désigne la longueur de l'enveloppe.

En particulier, l'élongation différentielle $\Delta'_L$ de l'enveloppe peut être égale à :

$$\Delta'_L = \frac{L_P}{2} . \lambda_P (T - T_1) - \frac{L_C}{2} . \lambda_C (T - T_1)$$

où $\lambda_C$ désigne le coefficient de dilatation thermique du capteur, $\lambda_P$ le coefficient de dilatation thermique de l'enveloppe, $L_C$ désigne la longueur du dispositif de maintien, $L_P$ désigne la longueur de l'enveloppe, T la température de fonctionnement, et $T_1$ la température de dilatation.

Selon une caractéristique complémentaire, l'étape de fixation de la fibre à l'enveloppe au niveau des ouvertures de passage peut comprendre un collage de la fibre au niveau des points de blocage.

Le procédé de fabrication peut comprend en outre la fixation du capteur à fibre à l'enveloppe au niveau d'au moins une zone de raccord.

La fixation du capteur à l'enveloppe au niveau d'au moins une zone de raccord peut être notamment réalisée par collage.

Selon une autre caractéristique, l'étape de positionnement du capteur à fibre optique peut comprendre le positionnement longitudinal du capteur à fibre optique sensiblement au milieu de l'enveloppe.

Dans une forme de réalisation, le capteur peut être un hydrophone.

En outre, un dispositif de capteur à fibre optique est décrit. Il comprend une enveloppe délimitant une cavité, un capteur à fibre optique, le capteur à fibre optique comprenant une fibre optique et un dispositif de maintien solidaire de la fibre optique, le dispositif de maintien étant traversé par la fibre optique entre deux points de fixation prévus sur le dispositif de maintien. Avantageusement, la fibre optique traverse l'enveloppe au niveau de deux ouvertures de passage prévues sur l'enveloppe et s'étend généralement suivant un axe longitudinal dans la cavité, ce qui délimite deux portions de fibres optiques de longueurs données dans l'enveloppe, de part et d'autre du dispositif de maintien, chaque portion de fibre s'étendant entre un des dits points de fixation du dispositif de maintien et l'ouverture de passage de l'enveloppe située du même côté du capteur à fibre optique et étant sensiblement en ligne droite, chaque portion de fibre comprenant une distension de sorte que la longueur de chaque portion de fibre s'étendant entre un point de fixation du dispositif de maintien et une ouverture de passage de l'enveloppe est supérieure à la distance géométrique entre le point de fixation du dispositif de maintien et l'ouverture de passage.

En particulier, la longueur d'onde de la lumière qui traverse la fibre optique du dispositif de capteur est une fonction linéaire d'un paramètre d'étirement correspondant à un étirement appliqué au dispositif capteur, la fonction linéaire présentant une rupture de pente pour une valeur critique du paramètre d'étirement telle que le coefficient directeur de la fonction linéaire après la valeur critique est supérieur au coefficient directeur de la fonction linéaire avant la valeur critique. L'invention permet ainsi de réaliser un étirement différentiel du conteneur par rapport au capteur avant de raccorder le conteneur à la fibre optique et/ou le capteur.

## Description des figures

D'autres caractéristiques et avantages de l'invention apparaîtront à l'aide de la description qui suit et des figures des dessins annexés dans lesquels:

- La figure 1 est un schéma représentant un dispositif de capteur à fibre optique selon une approche de l'art antérieur ;
- La figure 2 est un schéma représentant un dispositif de capteur à fibre optique selon certains modes de réalisation de l'invention ;
- La figure 3 est un schéma illustrant l'élongation différentielle de l'enveloppe par rapport au capteur à fibre optique selon certains modes de réalisation de l'invention ;
- La figure 4 est un organigramme représentant le procédé de fabrication d'un dispositif de capteur à fibre optique selon un mode de réalisation de l'invention ;
- La figure 5 est un organigramme représentant le procédé de fabrication d'un dispositif de capteur à fibre optique selon un autre mode de réalisation de l'invention ; et
- La figure 6 est un diagramme représentant l'évolution de la longueur d'onde en fonction d'un paramètre d'étirement correspondant à un étirement appliqué au dispositif de capteur.

Les dessins et les annexes à la description pourront non seulement servir à mieux faire comprendre la description, mais aussi contribuer à la définition de l'invention, le cas échéant.

## Description détaillée

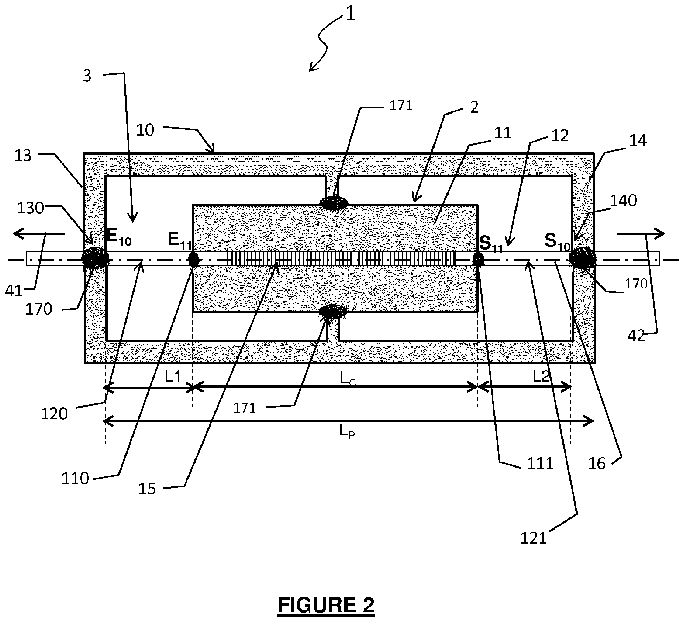

La figure 2 représente un dispositif de capteur à fibre optique 1 selon certains modes de réalisation de l'invention.

Le dispositif de capteur à fibre optique 1 comprend une enveloppe 10 délimitant une cavité 3 et au moins un capteur à fibre optique 2 logé dans la cavité 3. L'invention sera décrite ci-après en relation avec un seul capteur à fibre optique 2 logé dans la cavité 3 à titre d'exemple non limitatif.

Le capteur à fibre optique 2 comprend une fibre optique 12 dont les caractéristiques optiques sont sensibles à une grandeur physique, et un dispositif de maintien 11 solidaire de la fibre optique 12. Le dispositif de maintien 11 est traversé par la fibre optique et est fixé à celle-ci au niveau de deux points de fixation 110 et 111 prévus sur ledit dispositif de maintien. Le dispositif de maintien 11 est configuré pour maintenir la fibre en position dans la cavité 3. Il peut en outre comprendre des éléments additionnels pour l'amplification mécanique dans certaines applications acoustiques par exemple.

Le capteur à fibre optique 2 peut être tout type de capteur configuré pour mesurer une grandeur physique, tel que par exemple un hydrophone à fibre optique, un capteur de déformation, de pression, de température, d'accélération, etc. Bien que non limité à de telles applications, un tel capteur à fibre 2 est particulièrement adapté à des applications d'hydrophones acoustiques pour détecter des variations de pression acoustique. En effet, les composants électroniques n'ont pas à être prévus dans la partie immergée. Par suite, ils peuvent être remorqués aisément et il est possible de multiplexer sur une même fibre plusieurs dispositifs de capteur à fibre optique 1.

L'enveloppe 10 peut être configurée pour protéger mécaniquement le capteur, notamment contre les chocs, contre certains efforts dus à l'environnement (par exemple eau), contre la corrosion, etc. L'enveloppe 10 peut par exemple se présenter sous la forme d'un corps rigide tel qu'un tube cylindrique dont la droite génératrice coïncide sensiblement avec l'axe général de la fibre optique 12. L'enveloppe peut être formée de plusieurs éléments assemblés entre eux ou avoir une structure monobloc.

La cavité 3 délimitée par l'enveloppe 10 peut être remplie d'un fluide de protection tel que de l'huile pour optimiser le fonctionnement et la durée de vie du capteur.

L'enveloppe peut être souple ou rigide et étanche pour isoler le fluide qu'elle contient du milieu extérieur.

Selon un aspect de l'invention, la fibre optique 12 traverse l'enveloppe 10 de manière étanche au niveau de deux ouvertures de passage 130 et 140 prévues sur l'enveloppe. Ces ouvertures de passage peuvent être agencées respectivement sur deux faces de l'enveloppe, comme par exemple les deux faces opposées 13 et 14. Dans la cavité 3, la fibre optique s'étend généralement suivant un axe longitudinal, ce qui délimite deux portions de fibres optiques 120 et 121 de longueurs données, dans l'enveloppe, de part et d'autre du dispositif de maintien 11. Chaque portion de fibre 120 et 121 s'étend entre une des ouvertures de passage de l'enveloppe 130 et 140 et le point de fixation du dispositif de maintien (respectivement 110 et 111) le plus proche. Ainsi, la portion de fibre 120 s'étend entre le point d'entrée $E_{10}$ de l'enveloppe 10 et le point d'entrée $E_{11}$ du dispositif de maintien 11, dans la cavité 3 tandis que la portion de fibre 121 s'étend entre le point de sortie $S_{10}$ de l'enveloppe 10 et le point de sortie $S_{11}$ du dispositif de maintien 11, dans la cavité 3.

L'élément de fibre optique 12, formant la partie active du capteur 2 pénètre ainsi dans la cavité 3 par le point E10 et sort de la cavité par le point S10, en traversant les ouvertures de passages 130 et 140.

En complément, la fibre optique 12 peut comprendre au moins un réseau de Bragg 15 inscrit sur la fibre et configuré pour émettre des longueurs d'onde sensibles à la contrainte mécanique appliquée sur la fibre optique 12. La mesure de ces variations de longueurs d'onde permet de déduire la contrainte appliquée sur la fibre optique 12 et par suite de mesurer une grandeur physique telle que la pression acoustique par exemple, en utilisant un coffret d'interrogation.

De manière connue, la fibre optique 12 peut être constituée d'un tube (par exemple tube de silice) d'une centaine de microns de diamètre et comprendre en son centre un cœur formant un conduit pour canaliser la lumière. La fibre peut être éclairée au moyen d'un faisceau laser avec un réseau périodique de franges d'interférence. Le ou les réseaux de Bragg peuvent être photo-inscrits les uns à la suite des autres sur la fibre 12. En complément, la fibre 12 peut comprendre une gaine de protection pour protéger mécaniquement la fibre.

Le réseau de Bragg 15 peut comprendre un ensemble d'anneaux successifs inscrits transversalement dans le cœur de la fibre (par exemple par photo-inscription), la distance entre chaque anneau représentant le pas du réseau qui est représentatif d'une longueur d'onde donnée. Lorsque de la lumière est injectée dans la fibre 12, elle peut se propager dans le sens longitudinal (direction de la fibre) jusqu'à ce qu'elle atteigne le réseau de Bragg 15. Le réseau de Bragg filtre alors la longueur d'onde correspondant à son pas en s'opposant au passage de la raie de cette longueur d'onde et en la réfléchissant. Le spectre du faisceau réfléchi peut ensuite être analysé. Une déformation de la fibre entraîne une modification du pas du réseau, et par suite une variation de la longueur d'onde du faisceau réfléchi autour de sa valeur initiale, cette variation étant proportionnelle à l'étirement de la fibre. L'analyse de la variation de la longueur d'onde permet ainsi de mesurer la grandeur physique ayant induit la déformation de la fibre (par exemple la pression acoustique).

L'homme du métier comprendra que l'invention n'est pas limitée à une fibre optique 12 comprenant un réseau de Bragg inscrit et peut s'appliquer à d'autres types de fibres optiques, comme par exemple une fibre bobinée ou une fibre de type CLFO (Capteur Laser à Fibre Optique) munie d'un réseau de Bragg.

Dans un mode de réalisation, l'enveloppe 10 peut comprendre deux faces 13/14 en vis-à-vis comprenant chacune une ouverture de passage respectivement 130/140 pour permettre le passage de la fibre optique 12.

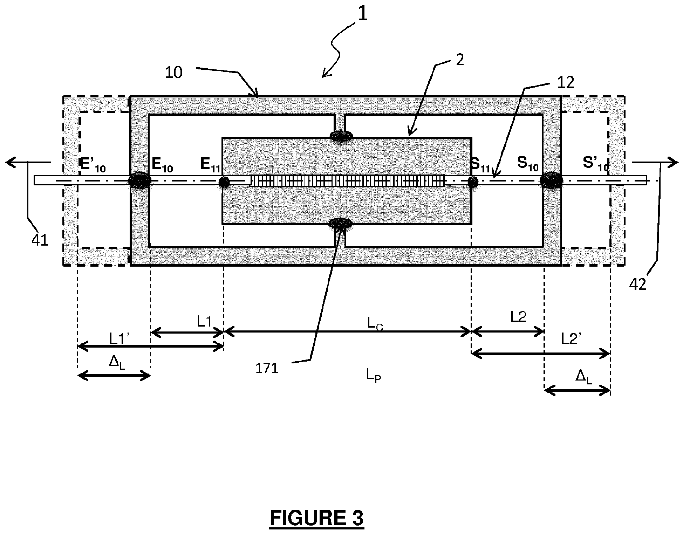

Après assemblage du dispositif capteur 1, l'enveloppe 10 est solidaire de la fibre optique 12 au niveau des deux ouvertures de passage 130 et 140 de l'enveloppe 10 et chaque portion 120 et 121 de la fibre 12 s'étend sensiblement selon un axe (i.e. sensiblement en ligne droite). La fibre optique 12 peut être fixée à l'enveloppe 10 au niveau des ouvertures de passage 130 et 140 par tout moyen de raccord rigide comme par exemple par soudure (e.g. soudure laser) ou collage (e.g. collage par revêtement polyamide ou par colle Epoxy). Dans le mode de réalisation de la figure 3, la fixation au niveau des points de passage 130 et 140 entre la fibre 12 et l'enveloppe est réalisée en utilisant des points de collage 170.

En complément, le dispositif de maintien 11 du capteur 2 peut être fixé à l'enveloppe 10 au niveau de points de raccord 171.

Selon un aspect de l'invention, les portions de la fibre optique 120 et 121 situées à l'intérieur de la cavité 3 de part et d'autre du dispositif de maintien 11 comprennent une distension réalisée par élongation différentielle de l'enveloppe 10 (encore appelé « étirement différentiel » ci-après) par rapport à la fibre optique avant la fixation de la fibre à l'enveloppe 10 au niveau des ouvertures de passage 130 et 140 de l'enveloppe 10.

Tel qu'utilisé ici, le terme « distension » de fibre désigne le fait que la longueur de chaque portion de fibre 120 et 121 à l'intérieur de la cavité 3 est supérieure à la distance géométrique ($[E_{10}E_{11}]$ et $[S_{11}S_{10}]$) entre le point d'entrée $E_{10}$ (ou respectivement le point de sortie $S_{10}$) de la fibre optique 12 dans la cavité 3 délimitée par l'enveloppe 10 et le point d'entrée $E_{11}$ (ou respectivement le point de sortie $S_{11}$) de la fibre optique 12 dans le dispositif de maintien 11 ($[E_{10}E_{11}] < L1$ et $[S_{11}S_{10}] < L2$). Il convient de noter qu'une distension est présente lorsque le capteur est au repos (c'est-à-dire non excité par une pression acoustique).

La figure 3 illustre l'élongation différentielle de l'enveloppe 10 par rapport au capteur à fibre optique 2. L'élongation différentielle de l'enveloppe 10 par rapport au capteur est réalisée après l'intégration du capteur à fibre 2 à l'intérieur de l'enveloppe 10, tandis que le capteur à fibre 2 (assemblé) est maintenu en position par tout outillage adapté (le capteur à fibre 2 reste ainsi fixe sans possibilité de déplacement). L'enveloppe 10 passe d'une première position (représentée schématiquement en pointillés sur la figure 3), suite à une élongation différentielle de l'enveloppe par rapport au capteur à fibre optique, à une position d'équilibre après avoir fixé la fibre 12 au niveau des ouvertures de passage 130 et 140 (représentée en trait pleins sur la figure 3). L'enveloppe 10 subit ainsi une variation de longueur entre deux instants, de chaque côté du capteur à fibre 2, représentant son étirement différentiel. Ainsi l'étirement différentiel $\Delta_{L_1}$ subi par l'enveloppe 10 du côté de l'ouverture de passage 130 est donné par la relation :

$$\Delta_{L_1} = L1' - L1,$$

L1' représente la longueur entre le point d'entrée $E'_{10}$ de l'enveloppe 10 et le point d'entrée $E_{11}$ du dispositif de maintien 11, dans la cavité 3, dans la première position d'élongation différentielle de l'enveloppe 10.

L1 représente la longueur entre le point d'entrée $E_{10}$ de l'enveloppe 10 et le point d'entrée $E_{11}$ du dispositif de maintien 11, dans la cavité 3, dans la position d'équilibre de l'enveloppe 10.

Similairement, l'étirement différentiel $\Delta_{L_2}$ subi par l'enveloppe 10 du côté de l'ouverture de passage 140 est donné par la relation :

$$\Delta_{L_2} = L2' - L2$$

L2' représente la longueur entre le point de sortie $S'_{10}$ de l'enveloppe 10 et le point de sortie $S_{11}$ du dispositif de maintien 11, dans la cavité 3 dans la première position d'élongation différentielle de l'enveloppe 10.

L2 représente la longueur entre le point de sortie $S_{10}$ de l'enveloppe 10 et le point de sortie $S_{11}$ du dispositif

de maintien 11, dans la cavité 3 dans la position d'équilibre de l'enveloppe 10.

L'introduction d'une telle élongation différentielle pendant la phase de fabrication permet ainsi d'obtenir un dispositif de capteur 1 présentant une distension sur chaque portion de fibre 120 et 121, après fabrication. La distension de chaque portion de fibre 120 et 121 du dispositif de capteur 1 dépend ainsi de l'étirement $\Delta_L$.

En particulier, la distension $D_1$ de la portion de fibre 120 satisfait la relation :

$$D_1 \approx L1 + \Delta_{L1}$$

La distension $D_2$ de la portion de fibre 121 satisfait la relation :

$$D_2 \approx L2 + \Delta_{L2}$$

Dans une forme de réalisation préférée, L1 est égal à L2 (L1=L2=L) et L1' est égale à L2' (L1'=L2'=L). Les deux portions de fibres 120 et 121 ont ainsi sensiblement la même longueur. La suite de la description sera faite en référence à ce mode de réalisation, à titre d'exemple non limitatif. L'étirement différentiel de l'enveloppe, de chaque côté du capteur sera ainsi noté :

$$\Delta_L = L' - L$$

Les distensions obtenues sur chaque portion de fibre 120 et 121 sont alors notées :

$$D = D_2 = D_1 \approx L + \Delta_L$$

Dans un premier mode de réalisation, l'élongation différentielle de l'enveloppe 10 par rapport à la fibre optique peut être réalisée par étirement mécanique. Dans ce mode de réalisation, l'étirement de l'enveloppe 10 peut être réalisé en la maintenant mécaniquement en extension avant la fixation de la fibre 12 à l'enveloppe 10 (au niveau des ouvertures de passage 130 et 140), par exemple par collage au niveau des points de fixation (130, 140). Un tel étirement mécanique peut être effectué en utilisant un dispositif d'étirement qui vient s'accrocher de part et d'autre de l'enveloppe 10 et l'étirer longitudinalement vers l'extérieur du dispositif capteur 1, comme indiqué par les flèches 41 et 42, tandis que le capteur à fibre optique 2 est maintenue en position à l'intérieur de la cavité 3, soit par fixation préalable du dispositif de maintien 11 à l'enveloppe 10 au niveau des points de raccord 171 (par exemple par collage), soit en utilisant un outillage adapté pour maintenir en position le dispositif de maintien (solidaire de la fibre) pendant l'étirement.

Sur la figure 3, la longueur $L_C$ désigne la longueur du dispositif de maintien 11 et la longueur $L_P$ désigne la longueur de l'enveloppe 10.

Dans ce premier mode de réalisation, on obtient ainsi une sur-longueur au niveau de chaque portion de fibre 120 et 121 par étirement mécanique de l'enveloppe 10, tandis que le capteur 2 reste maintenu en position. En considérant que $T_S$ désigne la température environnante dans la phase de fixation de la fibre et/ou du capteur 2 à l'enveloppe et que $T_{max}$ désigne la température maximale de fonctionnement du capteur 2, l'étirement $\Delta_L$ de l'enveloppe 10 est réalisé de manière à satisfaire l'équation suivante (contrainte d'étirement mécanique) :

$$\Delta_L \geq \frac{L_P}{2} . \lambda_P (T_{max} - T_S) - \frac{L_C}{2} . \lambda_C (T_{max} - T_S) \text{ (Equation 1)}$$

Dans l'équation ci-dessus, $\lambda_C$ désigne le coefficient de dilatation thermique du dispositif de maintien 11 du capteur 2 et $\lambda_P$ désigne le coefficient de dilatation thermique de l'enveloppe 10. $L_C$, $L_P$, $\Delta'_L$ peuvent notamment être exprimés en mètres, $T_S$ et $T_{max}$ en degrés Celsius (°C) et $\lambda_C$ et $\lambda_P$ en degré Celsius réciproque (°C$^{-1}$).

L'enveloppe 10 peut être alors relâchée (en la libérant du dispositif d'étirement) après fixation de la fibre 12 à l'enveloppe 10 au niveau des ouvertures de passages pour revenir à une position d'équilibre, ce qui génère une distension D sur chaque portion 120 et 121.

L'étirement mécanique $\Delta_L$ réalisé par étirement de l'enveloppe 10, selon l'équation 1, avant fixation de la fibre à l'enveloppe 10, au niveau des ouvertures de passage 130 et 140, permet de conserver une distension de fibre sur chaque portion 120 et 121, même si la température maximale de fonctionnement est atteinte.

Dans un deuxième mode de réalisation, l'étirement différentiel de l'enveloppe 10 par rapport à la fibre optique peut être réalisé par dilatation thermique, avant la fixation de la fibre 12 à l'enveloppe 10 au niveau des ouvertures de passage.

La dilatation thermique est réalisée de sorte que l'enveloppe 10 subisse une dilatation supérieure à celle du capteur 2, sous l'effet de la température appliquée. En particulier, l'enveloppe 10 peut être choisie de manière à avoir un coefficient de dilatation thermique selon l'équation 2 ci-dessous, ce qui permet d'obtenir une dilatation de l'enveloppe 10 supérieure à celle du capteur 2.

$$L_P \lambda_P > L_C \lambda_C \text{ (Equation 2)}$$

Pendant la dilatation thermique, le capteur 2 est maintenu en position à l'intérieur de la cavité 3 soit par fixation préalable du dispositif de maintien 11 à l'enveloppe 10 au niveau des points de raccord 171, soit en utilisant un outillage adapté pour maintenir en position le dispositif de maintien 11 (solidaire de la fibre) pendant la dilatation.

Dans ce mode de réalisation, la fixation de la fibre 12 à l'enveloppe 10 au niveau des ouvertures de passage 130 et 140 et/ou la fixation du capteur à fibre optique 2 à l'enveloppe 10 au niveau des points de raccord 171 peut être avantageusement réalisée à une température supérieure à la température maximale d'utilisation du dispositif capteur 1.

Dans toute la plage de fonctionnement en température, les portions de fibre 120 et 121 sont ainsi lâches du fait de la rétractation différentielle de l'enveloppe 10 par rapport au capteur 2.

En considérant que la fixation de la fibre 12 à l'enveloppe 10 (par exemple par collage) au niveau des ouvertures de passage s'effectue à une température $T_1$, une variation $\Delta'_L$ de la fibre peut être obtenue par dilatation thermique, pour une température de fonctionnement $T < T_1$, selon l'équation suivante :

$$\Delta'_L = \frac{L_P}{2}.\lambda_P(T - T_1) - \frac{L_C}{2}.\lambda_C(T - T_1) \text{ (Equation 3)}$$

$L_C$, $L_P$, $\Delta'_L$ peuvent notamment être exprimés en mètres, $T$ et $T_1$ peuvent être exprimés en degrés Celsius (°C) et $\lambda_C$ et $\lambda_P$ en degrés Celsius réciproque (°C$^{-1}$).

Pour obtenir des portions de fibre 120 et 121 lâches à l'intérieur de la cavité 3 délimitée par l'enveloppe 10, la variation de longueur $\Delta'_L$ définie dans l'équation 3 satisfait $\Delta'_L < 0$ quelque soit la température $T$ dans la plage de fonctionnement du capteur, ce qui revient à choisir les matériaux du capteur 2 et de l'enveloppe 10 de manière à satisfaire l'équation 2.

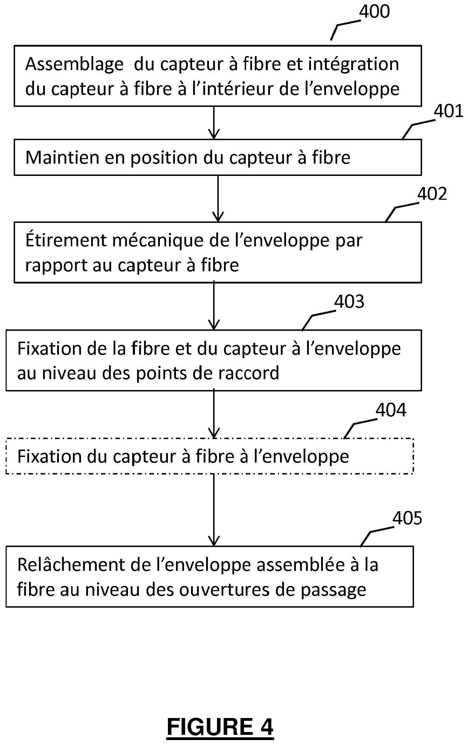

La figure 4 illustre le procédé de fabrication du dispositif de capteur à fibre optique 1, selon le premier mode de réalisation ou l'étirement différentiel est réalisé mécaniquement avant la fixation de la fibre et de l'enveloppe au niveau des ouvertures de passage 130 et 140.

A l'étape 400, le capteur à fibre optique 2 est assemblé et intégré dans l'enveloppe 10 de sorte que la fibre 12 traverse les ouvertures de passage 130 et 140, sans être fixée à celles-ci et que chaque portion de fibre 120 et 121 s'étende sensiblement en ligne droite. Dans cette phase, le capteur à fibre 2 peut être positionné sensiblement au milieu de la cavité 3.

A l'étape 401, le capteur à fibre optique 2 est maintenu en position. Dans un mode de réalisation, il peut être maintenu en position en fixant le dispositif de maintien 11 du capteur 2 à l'enveloppe au niveau des points de raccord 171, par exemple par collage. En variante, le capteur à fibre optique 2 peut être maintenu en position en utilisant un outillage adapté.

A l'étape 402, un étirement différentiel de l'enveloppe 10 par rapport au capteur 2 est réalisé mécaniquement selon l'axe longitudinal 16 au niveau de chaque face d'extrémité 13 et 14 de l'enveloppe 10 sur laquelle est agencée l'une des ouvertures de passage 130 et 140, vers l'extérieur de l'enveloppe 10 (selon les flèches 41 et 42 représentées sur la figure 3), en utilisant par exemple un dispositif d'étirement qui vient s'accrocher de part et d'autre de l'enveloppe 10 au niveau de chaque face d'extrémité 13 et 14.

A l'étape 403, la fibre 12 est fixée à l'enveloppe au niveau de chaque ouverture de passage 130 et 140, par exemple par collage. En supposant que la fixation de la fibre 12 à l'enveloppe 10 est effectuée à une température $T_S$, l'étirement mécanique de l'enveloppe est tel que l'enveloppe subit une élongation $\Delta_L$, selon l'équation 1.

Dans les modes de réalisation, où le capteur 2 est maintenu en position à l'étape 401, sans fixation du capteur 2 à l'enveloppe au niveau des points de raccord 171, le procédé peut comprendre l'étape 404 de fixation du dispositif de maintien 11 du capteur 2 à l'enveloppe 10 au niveau des points de raccord 171. En variante, cette étape de fixation du dispositif de maintien 11 du capteur 2 à l'enveloppe 10 peut être réalisée avant ou pendant l'étape 403.

A l'étape 405, l'enveloppe 10, à laquelle sont fixées les portions de fibre 120 et 121 au niveau des ouvertures de passage et le dispositif de maintien du capteur 2, est relâchée de manière à ce que l'enveloppe revienne en position. Il en résulte une distension sur chaque portion de fibre 120 et 121.

Le dispositif de capteur à fibre optique 1 ainsi obtenu peut alors être utilisé dans tout environnement de fonctionnement où la température est inférieure à $T_{max}$.

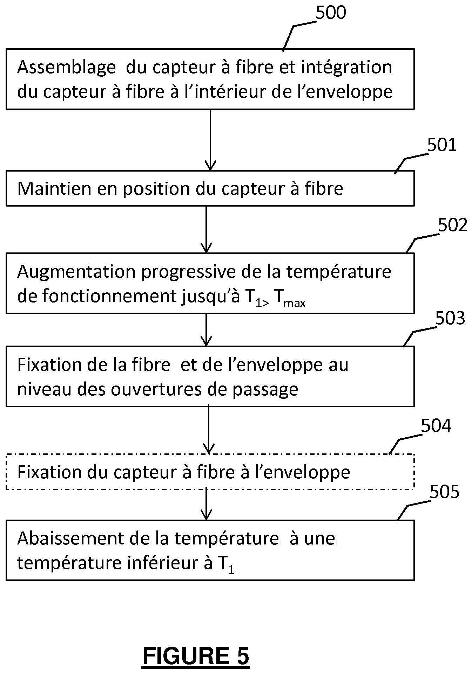

La figure 5 illustre le procédé de fabrication selon le deuxième mode de réalisation où l'étirement de la fibre est réalisé par dilation thermique.

A l'étape 500, le capteur à fibre optique 2 est assemblé et intégré dans l'enveloppe 10 de sorte que la fibre 12 traverse les ouvertures de passage 130 et 140, sans être fixée à celles-ci et que chaque portion de fibre 120 et 121 s'étende sensiblement en ligne droite, comme décrit en relation avec l'étape 400 de la figure 4.

A l'étape 501, le capteur à fibre optique 2 est maintenu en position comme décrit en relation avec l'étape 401 de la figure 4 (au moyen d'un outillage de maintien ou par fixation préalable du dispositif de maintien du capteur 11 à l'enveloppe 10).

A l'étape 502, les éléments pré-assemblés du dispositif capteur à fibre 1 sont exposés à une température T supérieure à la température maximale de fonctionnement $T_{max}$ du dispositif de capteur 1, en utilisant un système de chauffe. Le système de chauffe est mis en marche entre une température de départ $T_0$ et la température est augmentée jusqu'à ce que la température se stabilise à la température $T_1$.

En augmentant la température de fonctionnement progressivement jusqu'à la température $T_1$ tout en maintenant en position le capteur à fibre optique 2, l'enveloppe 10 se dilate davantage que le capteur 2, ce qui génère une élongation différentielle de l'enveloppe 10 par rapport au capteur 2.

A l'étape 503, la fibre 12 est fixée à l'enveloppe au niveau de chaque ouverture de passage 130 et 140, par exemple par collage. En supposant que la fixation de la fibre 12 à l'enveloppe 10 est effectuée à la température $T_1$, le procédé de dilatation thermique permet d'obtenir une élongation différentielle $\Delta'_L$ de l'enveloppe par rapport au capteur, selon l'équation 3. Il apparaît ainsi une distension au niveau de chaque portion de fibre 120 et 121 qui dépend de cette élongation différentielle.

Dans les modes de réalisation, où le capteur 2 est maintenu en position à l'étape 501, sans fixation du capteur 2 à l'enveloppe au niveau des points de raccord 171, le procédé peut comprendre une étape 504 de fixation du dispositif de maintien 11 du capteur 2 à l'enveloppe 10 au niveau des points de raccord 171. En variante, cette étape de fixation du dispositif de maintien 11 du capteur 2 à l'enveloppe 10 peut être réalisée à tout moment avant, pendant ou après l'étape 503.

A l'étape 505, l'enveloppe est ramenée à une température inférieure à T1 (par exemple température environnante), ce qui permet de la ramener à une position d'équilibre.

Le dispositif à capteur à fibre optique 1 ainsi obtenu peut alors être utilisé dans tout environnement de fonctionnement où la température est inférieure à $T_1$.

Les différents modes de réalisation proposés permettent ainsi d'obtenir une distension des portions de fibre optique 120 et 121 de part et d'autre du capteur 2, avant fixation de la fibre à l'enveloppe au niveau des ouvertures de passage. La sur-longueur de fibre ainsi obtenue permet de limiter le risque de raideur de la fibre tendue quelle que soit la plage de fonctionnement (notamment quelle que soit la plage de température) tout en filtrant les perturbations mécaniques qui peuvent venir de l'extérieur du capteur par la fibre 12.

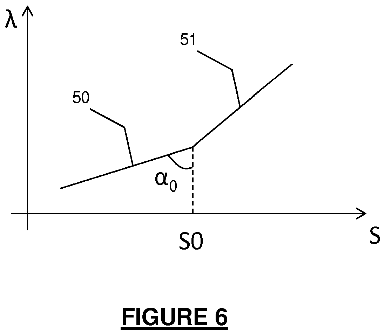

Le dispositif de capteur à fibre optique 1 ainsi obtenu est caractérisé par une loi particulière de variation de la longueur d'onde par rapport à un étirement appliqué au dispositif, comme illustré sur la figure 6, quelque soit le procédé d'étirement appliqué (par dilatation thermique, par étirement mécanique) et indépendamment du procédé d'étirement appliqué pendant la fabrication du dispositif de capteur 1. Plus précisément, la longueur d'onde de la lumière qui traverse la fibre optique du dispositif de capteur 1 est une fonction linéaire d'un paramètre d'étirement correspondant à un étirement appliqué au dispositif capteur, la fonction linéaire présentant une rupture de pente pour une valeur critique du paramètre d'étirement.

Ainsi, si un étirement progressif est appliqué au dispositif de capteur 1 (après fabrication), représenté par un paramètre d'étirement S, il a été observé que la longueur d'onde À progresse en fonction de l'étirement S jusqu'à une valeur critique S0 selon une première droite croissante 50 et, après la valeur critique S0 selon une deuxième droite croissante 51, le coefficient directeur de la deuxième droite étant supérieur au coefficient directeur de la première droite 50. La rupture de pente (passage de la première droite 50 à la deuxième droite 51) se produit ainsi au point S0 qui peut correspondre sensiblement à la température de collage de la fibre à l'enveloppe 10 ou à l'étirement maximal de l'enveloppe 10 selon le mode de réalisation du procédé de fabrication. Une fois le point de rupture atteint, la fibre 12, à l'intérieur de la cavité 3, se tend. Un tel comportement caractéristique du dispositif de capteur à fibre 1 peut être observé par exemple en plaçant le dispositif de capteur 1 (après fabrication) dans une étuve où la température est progressivement augmentée pour réaliser un étirement du dispositif par dilatation thermique (dans ce cas le paramètre d'étirement S peut être la température) ou en étirement mécaniquement le dispositif de capteur 1.

Les différents modes de réalisation de l'invention permettent par conséquent d'obtenir un bon fonctionnement du dispositif de capteur à fibre optique 1 dans une grande plage d'utilisation, en particulier en température, en introduisant une telle sur-longueur de fibre entre le capteur 2 et son enveloppe 10, pendant le procédé de fabrication du dispositif 1. Une telle solution n'a pas d'impact sur le volume de la cavité 3 délimitée par l'enveloppe 10. Par ailleurs, les différents modes de réalisation de l'invention limitent le risque de casse de la fibre optique. En effet, les déplacements de fibre étant très faibles, l'élongation de la fibre pendant le procédé de fabrication ne génère pas de flambement de la fibre optique susceptible de provoquer une rupture de la fibre 12. En réalisant l'élongation directement pendant le processus de fabrication, un capteur à fibre 1 relativement compact peut être obtenu, sans fragiliser la fibre optique, ce qui est particulièrement utile dans certaines applications telles que les applications acoustiques où le capteur à fibre optique 1 est utilisé en tant qu'hydrophone.

L'invention est limitée par les revendications et pas seulement aux modes de réalisation décrits ci-avant à titre d'exemple non limitatif. Elle englobe toutes les variantes de réalisation qui pourront être envisagées par l'homme du métier. En particulier, l'invention n'est pas limitée à un nombre particulier de zones de raccord entre le capteur 2 et l'enveloppe 10. En outre, elle n'est pas limitée à une application particulière de capteur ni à une forme particulière d'enveloppe. Dans certains modes de réalisation notamment, l'enveloppe 10 peut être constituée de différents matériaux et de différents éléments assemblés entre eux pour constituer une enveloppe.

Par ailleurs, bien que l'invention ait été décrite en relation avec un mode de réalisation où l'enveloppe 10 comprend un unique capteur à fibre 2, elle peut s'appliquer également à une pluralité de capteurs montés en parallèle (l'ensemble de capteurs pouvant être par exemple maintenu par un dispositif de maintien commun 11) ou montés en série.

## Revendications

1. Procédé de fabrication d'un dispositif de capteur à fibre optique (1), comprenant une enveloppe (10) délimitant une cavité (3) et un capteur à fibre optique (2), ledit capteur à fibre optique comprenant une fibre optique (12) et un dispositif de maintien du capteur (11) solidaire de la fibre optique, ledit dispositif de maintien étant traversé par la fibre optique entre deux points de fixation prévus sur ledit dispositif de maintien, **caractérisé en ce qu'**il comprend les étapes consistant à :

    - positionner le capteur à fibre optique (2) dans l'enveloppe (10) de manière à faire passer la fibre (12) à travers deux ouvertures de passage (130, 140) prévues sur l'enveloppe (10), la fibre optique s'étendant généralement suivant un axe longitudinal dans ladite cavité (3), ce qui délimite deux portions de fibres optiques dans l'enveloppe, de part et d'autre du dispositif de maintien (11), chaque portion de fibre s'étendant entre un desdits points de fixation du dispositif de maintien et une desdites ouvertures de passage de l'enveloppe, sensiblement selon une ligne droite;
    - maintenir le capteur à fibre optique en position ;
    - réaliser une élongation différentielle de l'enveloppe (10) par rapport au capteur à fibre optique (2) dans la direction longitudinale, et vers l'extérieur de l'enveloppe (10), tandis que le capteur à fibre optique reste maintenu en position ;
    - fixer la fibre optique à l'enveloppe (10) au niveau desdites ouvertures de passage ; et
    - générer une distension desdites portions de fibre, une distension d'une portion de fibre optique étant telle que la longueur de ladite portion de fibre s'étendant entre un point de fixation du dispositif de maintien et une ouverture de passage de l'enveloppe est supérieure à la distance géométrique entre ledit point de fixation du dispositif de maintien (11) et ladite ouverture de passage, ce qui permet de ramener l'enveloppe (10) dans une position d'équilibre.

2. Procédé de fabrication selon la revendication 1, **caractérisé en ce que** la dite étape d'élongation différentielle de la fibre est réalisée en étirant mécaniquement l'enveloppe (10) dans ladite direction longitudinale, de chaque côté de l'enveloppe (10), vers l'extérieur de l'enveloppe, puis en relâchant l'enveloppe, ce qui permet de générer ladite distension des portions de fibre.

3. Procédé de fabrication selon la revendication 2, **caractérisé en ce que** l'élongation différentielle $\Delta_L$ de l'enveloppe (10) par rapport au capteur à fibre optique (2) satisfait une contrainte relative à la température environnante $T_S$ au moment de la fixation de la fibre à l'enveloppe (10), à la température maximale $T_{max}$ de fonctionnement du capteur à fibre (2), au coefficient de dilatation thermique $\lambda_C$ du capteur à fibre (2) et au coefficient de dilatation thermique $\lambda_P$ de l'enveloppe (10).

4. Procédé de fabrication selon la revendication 3, **caractérisé en ce que** ladite contrainte est définie par l'inégalité :

$$\Delta_L \geq \frac{L_P}{2}.\lambda_P(T_{max} - T_S) - \frac{L_C}{2}.\lambda_C(T_{max} - T_S),$$

où $\lambda_C$ désigne le coefficient de dilatation thermique du capteur à fibre (2), $\lambda_P$ le coefficient de dilatation thermique de l'enveloppe, $L_C$ désigne la longueur du capteur à fibre (2), $L_P$ désigne la longueur de l'enveloppe (10), $T_S$ la température environnante au moment de la fixation de la fibre à l'enveloppe (10), et $T_{max}$ la température maximale de fonctionnement du capteur.

5. Procédé de fabrication selon la revendication 1, **caractérisé en ce que** la dite étape d'élongation différentielle est réalisée par dilatation thermique différentielle de l'enveloppe (10) par rapport au capteur à fibre optique (2) en augmentant la température jusqu'à une température de dilatation supérieure à la température maximale de fonctionnement définie pour le dispositif de capteur à fibre optique (1), puis en ramenant la température à une température inférieure à la température de dilatation, ce qui permet de générer ladite distension de fibre.

6. Procédé de fabrication selon la revendication 5, **caractérisé en ce que** l'enveloppe 10 est choisie de manière à avoir un coefficient de dilatation thermique selon l'équation :

$$L_P\lambda_P > L_C\lambda_C,$$

où $\lambda_C$ désigne le coefficient de dilatation thermique du dispositif de maintien du capteur (2), $\lambda_P$ le coefficient de dilatation thermique de l'enveloppe, $L_C$ désigne la longueur du dispositif de maintien (11), et Lp désigne la longueur de l'enveloppe (10).

7. Procédé de fabrication selon la revendication 6, **caractérisé en ce que** l'élongation différentielle de l'enveloppe (10) est égale à :

$$\Delta'_L = \frac{L_P}{2}.\lambda_P(T - T_1) - \frac{L_C}{2}.\lambda_C(T - T_1)$$

où $\lambda_C$ désigne le coefficient de dilatation thermique du capteur (11), $\lambda_P$ le coefficient de dilatation thermique de l'enveloppe, $L_C$ désigne la longueur du dispositif de maintien (11), $L_P$ désigne la longueur de l'enveloppe (10), T la température de fonctionnement, et $T_1$ la température de dilatation.

8. Procédé de fabrication selon l'une des revendications précédentes, **caractérisé en ce que** l'étape de fixation de la fibre à l'enveloppe au niveau des ouvertures de passage comprend un collage de la fibre au niveau des points de blocage.

9. Procédé de fabrication selon l'une des revendications précédentes, **caractérisé en ce qu'**il comprend en outre la fixation du capteur à fibre (2) à l'enveloppe (10) au niveau d'au moins une zone de raccord (171).

10. Procédé de fabrication selon la revendication 9, **caractérisé en ce que** la fixation du capteur (2) à l'enveloppe (10) au niveau d'au moins une zone de raccord (171) est réalisé par collage.

11. Procédé de fabrication selon l'une des revendications précédentes, **caractérisé en ce que** l'étape de positionnement du capteur à fibre optique comprend le positionnement longitudinal du capteur à fibre optique sensiblement au milieu de l'enveloppe.

12. Procédé de fabrication selon l'une des revendications précédentes, **caractérisé en ce que** le capteur est un hydrophone.

13. Procédé selon l'une des revendications précédentes, **caractérisé en ce que** la longueur d'onde de la lumière qui traverse la fibre optique du dispositif de capteur est une fonction linéaire d'un paramètre d'étirement correspondant à un étirement appliqué au dispositif capteur, ladite fonction linéaire présentant une rupture de pente pour une valeur critique du paramètre d'étirement telle que le coefficient directeur de la fonction linéaire après ladite valeur critique est supérieur au coefficient directeur de la fonction linéaire avant ladite valeur critique.

**Patentansprüche**

1. Verfahren zur Herstellung einer faseroptischen Sensorvorrichtung (1), die eine einen Hohlraum (3) begrenzende Hülle (10) und einen faseroptischen Sensor (2) umfasst, wobei der faseroptische Sensor eine optische Faser (12) und eine mit der optischen Faser fest verbundene Sensorhaltevorrichtung (11) umfasst, wobei durch die Haltevorrichtung zwischen zwei an der Haltevorrichtung vorgesehenen Befestigungspunkten die optische Faser verläuft, **dadurch gekennzeichnet, dass** es die folgenden Schritte umfasst:

   - Positionieren des faseroptischen Sensors (2) in der Hülle (10), um die Faser (12) durch zwei in der Hülle (10) vorgesehene Durchgangsöffnungen (130, 140) zu führen, wobei sich die optische Faser allgemein entlang einer Längsachse in dem Hohlraum (3) erstreckt, was zwei Abschnitte der optischen Faser in der Hülle auf beiden Seiten der Haltevorrichtung (11) begrenzt, wobei sich jeder Faserabschnitt zwischen einem der Befestigungspunkte der Haltevorrichtung (11) und einer der Durchgangsöffnungen der Hülle im Wesentlichen in einer geraden Linie erstreckt;
   - In-Position-Halten des faseroptischen Sensors;
   - Realisieren einer differentiellen Elongation der Hülle (10) in Bezug auf den faseroptischen Sensor (2) in der Längsrichtung und zur Außenseite der Hülle (10), während der faseroptische Sensor in Position gehalten wird;
   - Befestigen der optischen Faser an der Hülle (10) an den Durchgangsöffnungen; und
   - Erzeugen einer Distension der Faserabschnitte, wobei eine Distension eines Abschnitts der optischen Faser so ist, dass die Länge des Faserabschnitts, der sich zwischen einem Befestigungspunkt der Haltevorrichtung und einer Durchgangsöffnung der Hülle erstreckt, größer ist als der geometrische Abstand zwischen dem Befestigungspunkt der Haltevorrichtung (11) und der Durchgangsöffnung, so dass die Hülle (10) in eine Gleichgewichtsposition zurückgebracht wird.

2. Herstellungsverfahren nach Anspruch 1, **dadurch gekennzeichnet, dass** der Schritt der differentiellen Elongation der Faser durch mechanisches Strecken der Hülle (10) in der Längsrichtung von jeder Seite der Hülle (10) zur Außenseite der Hülle und anschließendes Loslassen der Hülle erfolgt, so dass die Distension der Faserabschnitte erzeugt wird.

3. Herstellungsverfahren nach Anspruch 2, **dadurch gekennzeichnet, dass** die differentielle Elongation $\Delta_L$ der Hülle (10) in Bezug auf den faseroptischen Sensor (2) eine Beschränkung relativ zur Umgebungstemperatur $T_s$ zum Zeitpunkt der Befestigung der Faser an der Hülle (10), zur maximalen Betriebstemperatur $T_{max}$ des faseroptischen Sensors (2), zum Wärmeausdehnungskoeffizienten $\lambda_c$ des faseroptischen Sensors (2) und zum Wärmeausdehnungskoeffizienten $\lambda_p$ der Hülle (10) erfüllt.

4. Herstellungsverfahren nach Anspruch 3, **dadurch gekennzeichnet, dass** die Beschränkung durch die folgende Ungleichung definiert wird:

$$\Delta_L \geq \frac{L_P}{2} . \lambda_P (T_{max} - T_S) - \frac{L_C}{2} . \lambda_C (T_{max} - T_S),$$

wobei $\lambda_c$ den Wärmeausdehnungskoeffizienten des Fasersensors (2) bezeichnet, $\lambda_p$ den Wärmeausdehnungskoeffizienten der Hülle bezeichnet, $L_c$ die Länge des faseroptischen Sensors (2) bezeichnet, Lp die Länge der Hülle (10) bezeichnet, $T_s$ die Umgebungstemperatur zum Zeitpunkt der Befestigung der Faser an der Hülle (10) bezeichnet und $T_{max}$ die maximale Betriebstemperatur des Sensors bezeichnet.

5. Herstellungsverfahren nach Anspruch 1, **dadurch gekennzeichnet, dass** der Schritt der differentiellen Elongation durch differentielle Wärmeausdehnung der Hülle (10) in Bezug auf den faseroptischen Sensor (2) erfolgt, indem die Temperatur auf eine Ausdehnungstemperatur erhöht wird, die höher ist als die für die faseroptische Sensorvorrichtung (1) definierte maximale Betriebstemperatur, und dann die Temperatur auf eine Temperatur unterhalb der Ausdehnungstemperatur zurückgeführt wird, so dass die Faserdistension erzeugt wird.

6. Herstellungsverfahren nach Anspruch 5, **dadurch gekennzeichnet, dass** die Hülle 10 so gewählt wird, dass sie einen Wärmeausdehnungskoeffizienten gemäß der folgenden Gleichung hat:

$$L_p \lambda_p > L_c \lambda_c,$$

wobei $\lambda_c$ den Wärmeausdehnungskoeffizienten der Haltevorrichtung des Sensors (2), $\lambda_P$ den Wärmeausdehnungskoeffizienten der Hülle, $L_c$ die Länge der Haltevorrichtung (11) und Lp die Länge der Hülle (10) bezeichnen.

7. Herstellungsverfahren nach Anspruch 6, **dadurch gekennzeichnet, dass** die differentielle Elongation der Hülle (10) wie folgt ist:

$$\Delta'_L = \frac{L_P}{2}.\lambda_P(T - T_1) - \frac{L_C}{2}.\lambda_C(T - T_1)$$

wobei $\lambda_c$ den Wärmeausdehnungskoeffizienten des Sensors (11), $\lambda_P$ den Wärmeausdehnungskoeffizienten der Hülle, $L_c$ die Länge der Haltevorrichtung (11), $L_P$ die Länge der Hülle (10), T die Betriebstemperatur und $T_1$ die Ausdehnungstemperatur bezeichnen.

8. Herstellungsverfahren nach einem der vorhergehenden Ansprüche, **dadurch gekennzeichnet, dass** der Schritt des Befestigens der Faser an der Hülle an den Durchgangsöffnungen ein Kleben der Faser an den Blockierpunkten umfasst.

9. Herstellungsverfahren nach einem der vorhergehenden Ansprüche, **dadurch gekennzeichnet, dass** es ferner das Befestigen des faseroptischen Sensors (2) an der Hülle (10) in mindestens einem Verbindungsbereich (171) umfasst.

10. Herstellungsverfahren nach Anspruch 9, **dadurch gekennzeichnet, dass** die Befestigung des Sensors (2) an der Hülle (10) in mindestens einem Verbindungsbereich (171) durch Kleben erfolgt.

11. Herstellungsverfahren nach einem der vorhergehenden Ansprüche, **dadurch gekennzeichnet, dass** der Schritt des Positionierens des faseroptischen Sensors das longitudinale Positionieren des faseroptischen Sensors im Wesentlichen in der Mitte der Hülle umfasst.

12. Herstellungsverfahren nach einem der vorhergehenden Ansprüche, **dadurch gekennzeichnet, dass** der Sensor ein Hydrophon ist.

13. Verfahren nach einem der vorhergehenden Ansprüche, **dadurch gekennzeichnet, dass** die Wellenlänge des die optische Faser der Sensorvorrichtung durchströmenden Lichts eine lineare Funktion eines Streckungsparameters ist, der einer auf die Sensorvorrichtung ausgeübten Streckung entspricht, wobei die lineare Funktion bei einem kritischen Wert des Streckungsparameters einen Neigungsbruch aufweist, so dass der Leitkoeffizient der linearen Funktion nach dem kritischen Wert größer als der Leitkoeffizient der linearen Funktion vor dem kritischen Wert ist.

**Claims**

1. A method for manufacturing an optical fibre sensor device (1), comprising an enclosure (10) delimiting a cavity (3) and an optical fibre sensor (2), said optical fibre sensor comprising an optical fibre (12) and a holding device of the sensor (11) secured to the optical fibre, said holding device being passed through by the optical fibre between two fixing points provided on said holding device, **characterised in that** it comprises the steps of:

   - positioning the optical fibre sensor (2) in the enclosure (10) so as to have the fibre (12) pass through two passage openings (130, 140) provided on the enclosure (10), the optical fibre extending generally along a longitudinal axis in said cavity (3), which delimits two portions of optical fibres in the enclosure, on either side of the holding device (11), each portion of fibre extending between one of said fixing points of the holding device and one of said passage openings of the enclosure, substantially along a straight line;
   - holding the optical fibre sensor in position;
   - producing a differential elongation of the enclosure (10) in relation to the optical fibre sensor (2) in the longitudinal direction, and toward the outside of the enclosure (10), while the optical fibre sensor remains held in position;
   - fixing the optical fibre to the enclosure (10) at said passage openings; and
   - generating a slackening of said portions of fibre, a slackening of a portion of the optical fiber being such that the length of said portion of fibre extending between a fixing point of the holding device and a passage opening of the enclosure is greater than the geometrical distance between said fixing point of the holding device (11) and said passage opening, making it possible to bring the enclosure (10) back into a position of balance.

**2.** The manufacturing method according to claim 1, **characterised in that** said step of differential elongation of the fibre is performed by mechanically stretching the enclosure (10) in said longitudinal direction, on each side of the enclosure (10), toward the outside of the enclosure, and by subsequently relaxing the enclosure, allowing the generation of said slackening of the portions of fibre.

**3.** The manufacturing method according to claim 2, **characterised in that** the differential elongation $\Delta_L$ of the enclosure (10) in relation to the optical fibre sensor (2) satisfies a constraint relating to the ambient temperature $T_S$ at the time of the fixing of the fibre to the enclosure (10), to the maximum operating temperature $T_{max}$ of the fibre sensor (2), to the thermal expansion coefficient $\lambda_C$ of the fibre sensor (2) and to the thermal expansion coefficient $\lambda_P$ of the enclosure (10).

**4.** The manufacturing method according to claim 3, **characterised in that** said constraint is defined by the inequality:

$$\Delta_L \geq \frac{L_P}{2} . \lambda_P (T_{max} - T_S) - \frac{L_C}{2} . \lambda_C (T_{max} - T_S),$$

where $\lambda_C$ denotes the thermal expansion coefficient of the fibre sensor (2), $\lambda_P$ the thermal expansion coefficient of the enclosure, $L_C$ denotes the length of the fibre sensor (2), Lp denotes the length of the enclosure (10), $T_S$ the ambient temperature at the time of the fixing of the fibre to the enclosure (10), and $T_{max}$ the maximum operating temperature of the sensor.

**5.** The manufacturing method according to claim 1, **characterised in that** said step of differential elongation is performed by differential thermal expansion of the enclosure (10) relative to the optical fibre sensor (2) by increasing the temperature up to an expansion temperature greater than the maximum operating temperature defined for the optical fibre sensor device (1), and by subsequently bringing the temperature to a temperature less than the expansion temperature, making it possible to generate said slackening of the fibre.

**6.** The manufacturing method according to claim 5, **characterised in that** the enclosure 10 is chosen so as to have a thermal expansion coefficient according to the equation:

$$L_P \lambda_P > L_C \lambda_C,$$

where $\lambda_C$ denotes the thermal expansion coefficient of the holding device of the sensor (2), $\lambda_P$ the thermal expansion coefficient of the enclosure, $L_C$ denotes the length of the holding device (11), and $L_P$ denotes the length of the enclosure (10).

**7.** The manufacturing method according to claim 6, **characterised in that** the differential elongation of the enclosure (10) is equal to:

$$\Delta'_L = \frac{L_P}{2} . \lambda_P (T - T_1) - \frac{L_C}{2} . \lambda_C (T - T_1)$$

in which $\lambda_C$ denotes the thermal expansion coefficient of the sensor (11), $\lambda_P$ the thermal expansion coefficient of the enclosure, $L_C$ denotes the length of the holding device (11), $L_P$ denotes the length of the enclosure (10), T the operating temperature, and $T_1$ the expansion temperature.

**8.** The manufacturing method according to one of the preceding claims, **characterised in that** the step of fixing of the fibre to the enclosure at the passage openings comprises gluing the fibre at the blocking points.

**9.** The manufacturing method according to one of the preceding claims, **characterised in that** it further comprises fixing the fibre sensor (2) to the enclosure (10) at at least one connection zone (171).

**10.** The manufacturing method according to claim 9, **characterised in that** fixing of the sensor (2) to the enclosure (10) at at least one connection zone (171) is performed by gluing.

11. The manufacturing method according to one of the preceding claims, **characterised in that** the step of positioning the optical fibre sensor comprises the longitudinal positioning of the optical fibre sensor substantially in the middle of the enclosure.

12. The manufacturing method according to one of the preceding claims, **characterised in that** the sensor is a hydrophone.

13. Method according to any one of the preceding claims, **characterised in that** the wavelength of the light which passes through the optical fibre of the sensor device is a linear function of a stretching parameter corresponding to a stretching applied to the sensor device, said linear function exhibiting a slope break for a critical value of the stretching parameter such that the directing coefficient of the linear function after said critical value is greater than the directing coefficient of the linear function before said critical value.

**FIGURE 1**

**FIGURE 2**

**FIGURE 3**

400

Assemblage du capteur à fibre et intégration du capteur à fibre à l'intérieur de l'enveloppe

401

Maintien en position du capteur à fibre

402

Étirement mécanique de l'enveloppe par rapport au capteur à fibre

403

Fixation de la fibre et du capteur à l'enveloppe au niveau des points de raccord

404

Fixation du capteur à fibre à l'enveloppe

405

Relâchement de l'enveloppe assemblée à la fibre au niveau des ouvertures de passage

## FIGURE 4

500

Assemblage du capteur à fibre et intégration du capteur à fibre à l'intérieur de l'enveloppe

501

Maintien en position du capteur à fibre

502

Augmentation progressive de la température de fonctionnement jusqu'à $T_{1>}$ $T_{max}$

503

Fixation de la fibre et de l'enveloppe au niveau des ouvertures de passage

504

Fixation du capteur à fibre à l'enveloppe

505

Abaissement de la température à une température inférieur à $T_1$

# FIGURE 5

**FIGURE 6**

**EP 3 274 670 B1**

## RÉFÉRENCES CITÉES DANS LA DESCRIPTION

**Documents brevets cités dans la description**

- CN 102288226 B